# EUROPÄISCHE PATENTSCHRIFT

(11) **EP 3 163 123 B1**
(45) Veröffentlichungstag und Bekanntmachung des Hinweises auf die Patenterteilung: **12.08.2020**
(21) Anmeldenummer: 16195100.9
(22) Anmeldetag: 21.10.2016
(51) Int. Cl.: F16H 55/12

(54) **ZAHNKRANZ SOWIE VERFAHREN UND VORRICHTUNG ZU DESSEN HERSTELLUNG**
SPROCKET AND METHOD AND DEVICE FOR PRODUCING THE SAME
COURONNE DENTÉE ET SON PROCÉDÉ ET SON DISPOSITIF DE FABRICATION

(30) Priorität: 29.10.2015 DE 102015014001
(43) Veröffentlichungstag der Anmeldung: 03.05.2017
(73) Patentinhaber: Stahlwerk Augustfehn GmbH, 26689 Augustfehn (DE)
(72) Erfinder: Finkernagel, Peter, 26689 Apen (DE)
(74) Vertreter: Jabbusch, Matthias

(56) Entgegenhaltungen:
- WO-A1-2012/002866
- CH-A- 170 169
- CN-U- 201 963 840

## Beschreibung

Die Erfindung betrifft einen Zahnkranz aus einzelnen, jeweils wenigstens eine Verzahnung aufweisenden metallischen Zahnkranzsegmenten, ein Verfahren zum Herstellen von Zahnkränzen aus metallischen Rohblöcken sowie eine Vorrichtung zum Herstellen von Halbfabrikaten für Zahnkränze.

Aus mehreren Zahnkranzsegmenten zusammengesetzte Zahnkränze sind laut der freien Enzyklopädie Wikipedia aus dem Schwermaschinenbau hinlänglich bekannt und werden dort insbesondere zur Ausbildung von Großwälzlagern benötigt. Ein Haupteinsatzgebiet derartiger Großwälzlager liegt im Bergbau, wo sie regelmäßig rauen Betriebsbedingungen, Dauerbetrieb und großen Wartungsintervallen ausgesetzt sind. Bekannte Zahnkranzsegmente sind als Gussstücke ausgeführt, deren gießgerechte Konstruktion regelmäßig Verrippungen erfordert. Bei Gussteilen problematisch ist jedoch das Auftreten von Gestalt- und Maßänderungen, von Lunkerbildungen sowie die Entstehung wenig belastbarer Materialgefüge während der Erstarrungsprozesse. Die Folge sind eine hohe Ausschussproduktion sowie das Auftreten von herstellungsbedingtem Bauteilversagen.

Das Dokument CN 201 963 840 U zeigt und beschreibt ein Zahnkranz aus einzelnen, jeweils wenigstens eine Verzahnung aufweisenden metallischen Zahnkranzsegmenten.

Der Erfindung liegt deshalb die Aufgabe zugrunde, einen Zahnkranz, ein Verfahren zur Herstellung eines Zahnkranzes sowie eine Vorrichtung zur Herstellung von Zahnkranzsegmenten für einen Zahnkranz aufzuzeigen, mit denen die Belastbarkeit des Zahnkranzes auf effiziente Weise verbessert ist. Diese Aufgabe ist erfindungsgemäß durch einen Zahnkranz mit den Merkmalen des Patentanspruches 1, durch ein Verfahren mit den Merkmalen des Patentanspruches 5 sowie durch eine Vorrichtung mit den Merkmalen des Patentanspruches 16 gelöst. Vorteilhafte Weiterbildungen sind in den jeweils auf diese Patentansprüche rückbezogenen Unteransprüchen angegeben. Der erfindungsgemäße Zahnkranz zeichnet sich dadurch aus, dass jedes Zahnkranzsegment wenigstens ein Gesenkschmiedestück ist, dass jedes Gesenkschmiedestück die Grundform eines der Länge nach gekrümmten Quaders aufweist, dass der Quader eine mittig auf einer seiner Bogenkanten (gebogene Kanten des gekrümmten Quaders) gelegene Materialausnehmung aufweist, dass die die Materialausnehmung begrenzende Oberfläche zumindest abschnittsweise konkav gewölbt ausgebildet ist und dass jedes Gesenkschmiedestück spanend nachbearbeitete Anschlussflächen aufweist.

Durch den einem Gesenkschmiedestück zuteilwerdenden Umformprozess weist der erfindungsgemäße Zahnkranz ein vorteilhaft dichtes und zähes Materialgefüge auf, mit welchem ein hoher Formänderungswiderstand erreicht ist. Dabei dient die Materialausnehmung sowohl der Materialeinsparung als auch der Reduktion der bei der Abkühlung des Gesenkschmiedestückes auftretenden Schwindmaße. Mit der konkav gewölbten Oberfläche ist der Zahnkranz besonders verformungssteif ausgebildet. Die spanend nachbearbeiteten Anschlussflächen sind insbesondere als Fügeflächen zum Zusammenfügen der Zahnkranzsegmente zu dem Zahnkranz und als Anlageflächen für den Einbau in technische Aufnahmestrukturen, im weiteren Sinne aber auch als Mantelflächen einer Verzahnung für den An- oder Abtrieb des Zahnkranzes ausgebildet.

Nach einer ersten Weiterbildung des erfindungsgemäßen Zahnkranzes weist die konkav gewölbte Oberfläche einen in der Querschnittsprofilfläche des Gesenkschmiedestückes parabelförmig ausgebildeten Verlauf auf. Die Parabelform bietet die Möglichkeit zur Ausbildung einer an die ungleichen Seitenverhältnisse von Quadern mit deutlich abgeflachten Profilquerschnitten konstruktiv angepassten Ausnehmung mit gewölbter Oberfläche.

Nach einer nächsten Weiterbildung der Erfindung ist die konkav gewölbte Oberfläche eine unbearbeitete Schmiedeoberfläche. Eine solche an Gesenkschmiedestücken ausgebildete Schmiedeoberfläche weist eine hohe Oberflächengüte auf, so dass auf eine mechanische Nachbearbeitung verzichtet werden kann. Grundsätzlich liegt es jedoch im Rahmen der Erfindung, die Oberflächengüte der Schmiedeoberfläche durch Sandstrahlen, Schleifen oder Beschichten zu vergüten.

Um die Zahnkranzsegmente zu dem erfindungsgemäßen Zahnkranz zusammensetzen zu können, weist jedes Gesenkschmiedestück in seinen Anschlussflächen ausgebildete Schraubenaufnahmestrukturen auf. Diese sind beispielsweise als Durchgangsbohrungen mit zylindrischen Senkungen ausgebildet, die zur Auflage der Köpfe von Zylinderkopfschrauben dienen. Die zylindrischen Senkungen sind in den den Anschlussflächen abgekehrten, unbearbeiteten Schmiedeoberflächen gelegen.

Das Verfahren betreffend zeichnet sich die Erfindung dadurch aus, dass die Rohblöcke zu Kranzsegmentrohlingen warmumgeformt werden, dass die Kranzsegmentrohlinge unter Erhalt von Zahnkranzsegmenten spanend bearbeitet werden, und dass die Zahnkranzsegmente zu Zahnkränzen zusammengefügt werden. Für die Warmumformung werden die Rohblöcke zunächst einmal auf eine Temperatur oberhalb der Rekristallisationstemperatur ihres Metalls erwärmt. Die erwärmten Rohblöcke werden sodann durch mechanische Kraftbeaufschlagung in einem Schmiedeprozess zu den Kranzsegmentrohlingen druckumgeformt. Die Warmumformung stellt einen erfindungswesentlichen Verfahrensschritt dar, mit welchem nachteilige Materialverluste und Beschädigungen des metallischen Gefüges minimal klein gehalten werden. Bei der in einem zweiten Verfahrensschritt durchzuführenden spanenden Bearbeitung werden die das Zahnkranzsegment auszeichnenden Verzahnungen aus dem Vollen der Kranzsegmentrohlinge herausgearbeitet. Grundsätzlich liegt es jedoch im Rahmen der Erfindung, wenn die Verzahnungen in einem Warmumformungsprozess vorgeformt und lediglich in einem abschließenden Verfahrensschritt spanend, beispielsweise in einem Schleifvorgang, nachbearbeitet werden. Bei dem im dritten Verfahrensschritt durchzuführenden Zusammenfügen der Zahnkranzsegmente werden diese fest zu den Zahnkränzen miteinander verbunden. Vorzugsweise sind derartige feste Verbindungen als Schraubverbindungen ausgeführt, mit denen an den Zahnkranzsegmenten ausgebildete Anschlussflächen gegeneinander verspannt werden.

Nach einer ersten Weiterbildung des erfindungsgemäßen Verfahrens werden die Rohrblöcke aus Strangguss geschnitten. Eine andere Möglichkeit besteht darin, die Rohblöcke aus einer Schmelze zu gießen. Das Gießen der Rohlinge ist insbesondere für die Fertigung besonders großvolumiger Kranzsegmentrohlinge geeignet, da ein Schneiden von Stranggussabschnitten mit großen Stärken nachteilig zeitintensiv ist.

Nach einer nächsten Weiterbildung der Erfindung werden die Rohblöcke beim Warmumformen zu den Kranzsegmentrohlingen zunächst zu Halbfabrikaten gesenkumgeformt und die Halbfabrikate dann zu den Kranzsegmentrohlingen gebogen. Je nach Ausbildung des Schmiedegesenkes besteht jedoch auch die Möglichkeit, die Rohblöcke beim Warmumformen zu den Kranzsegmentrohlingen zunächst zu Halbfabrikaten vorzubiegen und diese gebogenen Halbfabrikate dann zu den Kranzsegmentrohlingen gesenkumzuformen. Werden jedoch Halbfabrikate in bevorzugter Weise zu den Kranzsegmentrohlingen gebogen, ist anzuraten, die Halbfabrikate vor dem Biegen zu den Kranzsegmentrohlingen weich zu glühen. Zum Weichglühen werden die Halbfabrikate zunächst solange auf einer Umwandlungstemperatur gehalten, bis die bei der vorangegangenen Umformung im metallischen Gefüge aufgebauten Inhomogenitäten weitgehend beseitigt sind. Anschließend werden die homogenisierten Halbfabrikate zur weiteren Kornverfeinerung auf Normalisierungstemperatur erwärmt. Die erwärmten Halbfabrikate weisen schließlich eine vorteilhaft gleichmäßige Gefügestruktur und einen vorteilhaft kleinen Formänderungswiderstand auf, mit welcher das Auftreten von möglichen Rissbildungen beim nachfolgenden Biegen der Halbfabrikate vermieden wird und erforderliche Biegekräfte vorteilhaft klein sind.

Nach einer anderen Weiterbildung der Erfindung werden die Kranzsegmentrohlinge vor ihrem Zusammenfügen zu den Zahnkränzen einer Form- und Maßkontrolle unterzogen. Bei der Form- und Maßkontrolle wird festgestellt, ob die Formgebung und die Abmessungen der erkalteten Kranzsegmentrohlinge im Rahmen vorgeschriebener Toleranzen liegen. Nach der Form- und Maßkontrolle werden die außerhalb des Toleranzbereiches liegenden Kranzsegmentrohlinge gerichtet. Dabei werden die Kranzsegmentrohlinge vorzugsweise auf einer Richtbank insbesondere nachgebogen. Erforderlichenfalls werden die Kranzsegmentrohlinge beim Richten auch gestaucht, gestreckt oder verdreht.

Um die beim Biegen und Richten im metallischen Gefüge aufgebauten Spannungen wieder abzubauen, werden die Kranzsegmentrohlinge nach dem Biegen aus den Halbfabrikaten bzw. nach dem Richten der Kranzsegmentrohlinge spannungsarm geglüht. Zum Spannungsarmglühen werden die Kranzsegmentrohlinge auf die Spannungsarmglühtemperatur ihres Metalls erwärmt, erforderlichenfalls gehalten, und nachfolgend zur Vermeidung eines erneuten Spannungsaufbaus langsam wieder abgekühlt. Die auf diese Weise spannungsarm geglühten Kranzsegmentrohlinge weisen dann lediglich noch Spannungen bis zur Größe der Streckgrenze auf, so dass ein Auftreten von Verzug bei der Fertigbearbeitung der Kranzsegmentrohlinge zu Zahnkranzsegmenten unterbleibt.

Nach einer nächsten Weiterbildung der Erfindung werden die spannungsarm geglühten Kranzsegmentrohlinge vergütet. Dazu werden die Kranzsegmentrohlinge auf die Härtetemperatur erwärmt und dort gehalten, bis sich sämtliches Ferrit im Austenit gelöst hat. Dann werden die erwärmten Kranzsegmentrohlinge in einem fluiden Medium abgeschreckt und auf die geforderten Festigkeitswerte angelassen. Die auf diese Weise vergüteten Kranzsegmentrohlinge weisen eine vorteilhaft gute Durchvergütung mit gleichmäßigen Festigkeitswerten auf, so dass sie für die rauen Betriebsbedingungen von im Bergbau eingesetzten Großwälzlagern besonders geeignet sind.

Um die Zahnkranzsegmente zu Zahnkränzen zusammenzufügen, wird vorgeschlagen, die Zahnkranzsegmente miteinander zu verspannen. Beim Verspannen werden die Zahnkranzsegmente über Bolzen und/oder Schrauben formschlüssig miteinander verbunden. Formschlussverbindungen sind lösbare Verbindungen und bieten damit vorteilhaft die Möglichkeit, einen schadhaften erfindungsgemäßen Zahnkranz durch Austausch eines oder mehrerer Zahnkranzsegmente instand zu setzen.

Die Vorrichtung betreffend zeichnet sich die Erfindung dadurch aus, dass das Werkzeug ein Schmiedegesenk mit wenigstens einer zwischen den Gesenkteilen ausgebildeten Hohlform sowie wenigstens einer die Hohlform einfassenden Gratbahn ist, dass die einen Kranzsegmentrohling abbildende Hohlform die Grundform eines langgestreckten Quaders aufweist, dass der Quader eine mittig auf einer seinen langen Kanten gelegene Hohlformreduktion aufweist, dass mit der Hohlformreduktion eine am Schmiedegesenk zumindest abschnittsweise konvex gewölbte Formfläche abgebildet ist, und dass an der Hohlform einander diagonal gegenüberliegende und nicht von der Hohlformreduktion betroffene lange Kanten an der Gratbahn des Schmiedegesenkes verlaufen.

Um mit den in einer Schmiede verfügbaren Pressendrücken auskommen zu können, und auch, um die Werkzeugkosten klein halten zu können, ist das Werkzeug vorzugsweise als offenes Schmiedegesenk ausgebildet, mit welchem es zur Herstellung eines einzigen Halbfabrikates mehrerer aufeinanderfolgender Pressenhübe bedarf. Die zwischen den Gesenkteilen ausgebildete Gratbahn dient dem Abfließen überschüssigen Materials in eine ihr vorgelagerte Gratrinne und ist von wesentlicher Bedeutung für die mit dem Umformprozess zu erreichende vollständige Formfüllung. Die Ausbildung der Hohlform in der Grundform eines langgestreckten Quaders erfordert den Einsatz wenigstens eines weiteren, dem Schmiedegesenk nachgeschalteten Werkzeuges, welches vorzugsweise ein Biegewerkzeug ist. Mit dem Biegewerkzeug werden die gesenkumgeformten Halbfabrikate dann zu Kranzsegmentrohlingen mit vorbestimmten Biegeradien gebogen. Der Vorteil einer die Grundform eines langgestreckten Quaders aufweisenden Hohlform besteht somit darin, dass die überaus hohen Investitionskosten für das Schmiedegesenk auf die Herstellung von Zahnkränzen mit unterschiedlichen Durchmessern verteilt werden können.

Der die Hohlform diagonal einfassende Kantenverlauf der Gratbahn definiert die Teilungsebene des Schmiedegesenkes in einer besonders fließgerechten und werkzeugschonenden Weise, da sämtliche die Gratbahn begrenzende Seitenschrägen in einem Winkel von etwa 45° ausgeführt werden können. Die erfindungsgemäße Vorrichtung dient damit der Herstellung gesenkgeschmiedeter Halbzeuge, die für eine effiziente Weiterverarbeitung zu hochbeanspruchbaren Zahnkränzen besonders geeignet ist.

Nach einer ersten Weiterbildung der erfindungsgemäßen Vorrichtung weist die am Schmiedegesenk konvex gewölbte Formfläche einen in der Querschnittsprofilfläche der Hohlform parabelförmig ausgebildeten Verlauf auf. Die Parabelform dient der Ausbildung eines besonders verschleißarmen und verformungssteifen Schmiedegesenkes mit einer vorteilhaft niedrigen Kerbwirkung im Bereich der Hohlformreduktion. Selbstverständlich liegt es im Rahmen der Erfindung, die konvex gewölbte Formfläche mit anderen gerundeten Verläufen auszubilden.

Ausführungsbeispiele der Erfindung, aus denen sich weitere erfinderische Merkmale ergeben, sind in der Zeichnung dargestellt. Es zeigen:
- Fig. 1: eine perspektivische Darstellung eines Rohblockes für einen erfindungsgemäßen Zahnkranz;
- Fig. 2: eine perspektivische Darstellung eines aus einem Rohblock gemäß Fig. 1 gesenkumgeformten Halbfabrikates;
- Fig. 3: eine perspektivische Darstellung eines aus einem Halbfabrikat gemäß Fig. 2 gebogenen Kranzsegmentrohlings;
- Fig. 4: eine perspektivische Darstellung eines aus einem Kranzsegmentrohling gemäß Fig. 3 spanend herausgearbeiteten Zahnkranzsegmentes;
- Fig. 5: eine perspektivische Teildarstellung eines aus mehreren Zahnkranzsegmenten gemäß Fig. 4 zusammengefügten Zahnkranzes;
- Fig. 6: einen Profilschnitt durch ein Werkzeug für eine erfindungsgemäße Vorrichtung zur Herstellung eines Halbfabrikates gemäß Fig. 2; und
- Fig. 7: eine perspektivische Explosionsdarstellung des Werkzeuges gemäß Fig. 6.

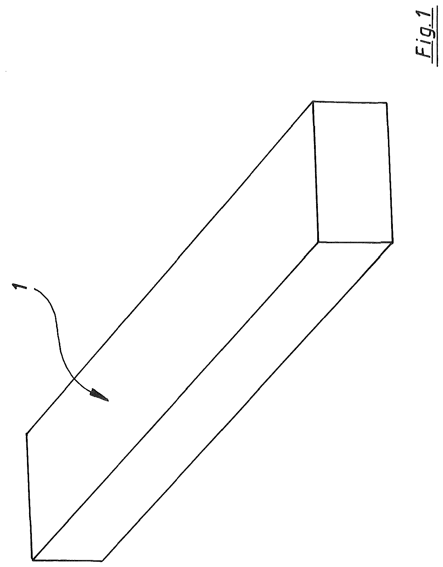

Die Fig. 1 zeigt eine perspektivische Darstellung eines Rohblockes 1 in Form eines quaderförmigen Stranggussabschnittes.

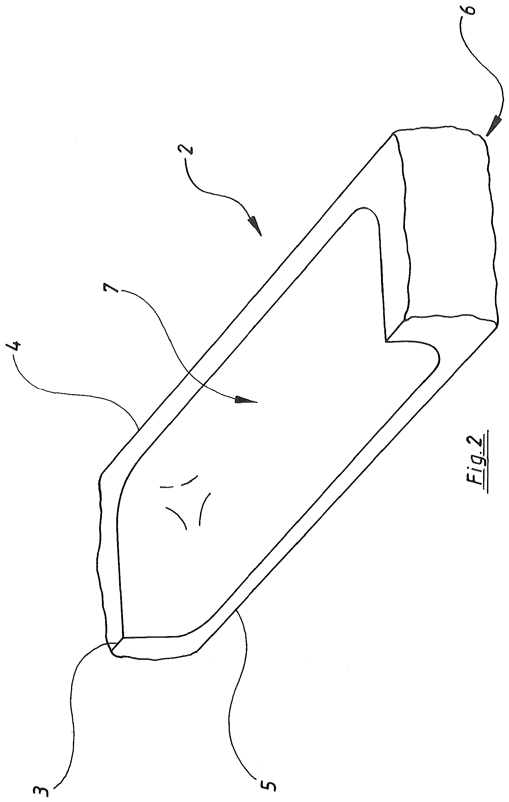

Die Fig. 2 zeigt eine perspektivische Darstellung eines aus einem Rohblock gemäß Fig. 1 gesenkumgeformten Halbfabrikates 2 in Form eines Gesenkschmiedestückes. Das Halbfabrikat 2 weist die Grundform eines langgestreckten Quaders auf, der eine mittig auf einer seiner Längskanten 3, 4, 5, 6 gelegene Materialausnehmung 7 aufweist. Die die Materialausnehmung 7 begrenzende Oberfläche ist eine unbearbeitete Schmiedeoberfläche 8, die jeweils in den zu den Stirnseiten des Halbfabrikates 2 gelegenen Bereichen konkav gewölbt ausgebildet ist.

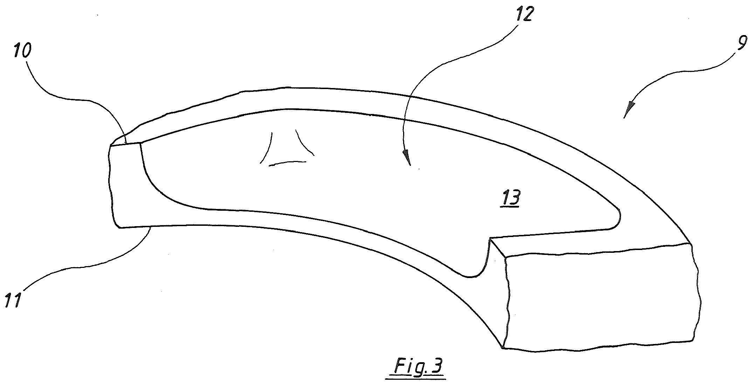

Die Fig. 3 zeigt eine perspektivische Darstellung eines aus einem Halbfabrikat gemäß Fig. 2 gebogenen Kranzsegmentrohlings 9. Der Kranzsegmentrohling 9 hat die Grundform eines der Länge nach gekrümmten Quaders, wobei der Quader eine mittig auf der oberen seiner beiden inneren Bogenkanten 10, 11 gelegene Materialausnehmung 12 aufweist. Die die Materialausnehmung 12 begrenzende Schmiedeoberfläche 13 ist vollflächig konkav gewölbt ausgebildet.

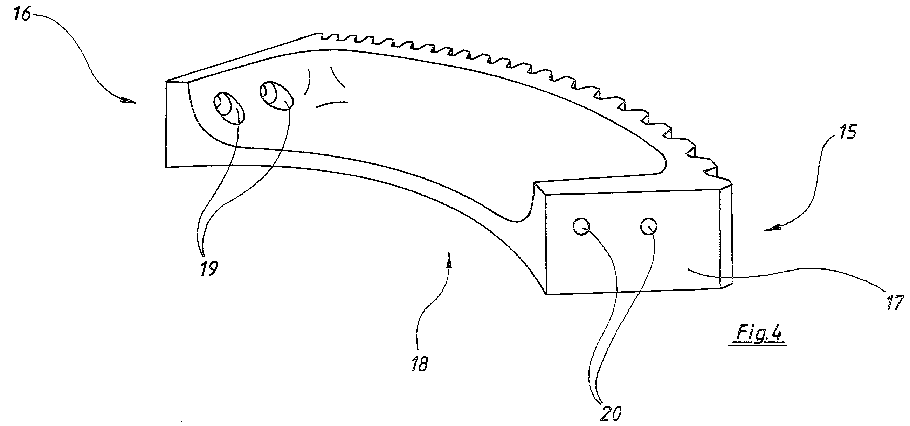

Die Fig. 4 zeigt eine perspektivische Darstellung eines aus einem Kranzsegmentrohling gemäß Fig. 3 spanend herausgearbeiteten Zahnkranzsegmentes 14 mit einer Außenverzahnung 15. Bei einer zum Kranzsegmentrohling gemäß Fig. 3 unveränderten Grundform weist das Zahnkranzsegment 14 spanend nachbearbeitete Anschlussflächen 16, 17, 18 auf, wobei in den stirnseitigen Anschlussflächen 16 und 17 Schraubenaufnahmestrukturen 19, 20 in Form von Durchgangsbohrungen mit zylindrischen Senkungen für Zylinderkopfschrauben ausgebildet sind. Die Anschlussfläche 18 dient der planflächigen Auflage des Zahnkranzsegmentes 14 auf einer nicht dargestellten Trägerstruktur.

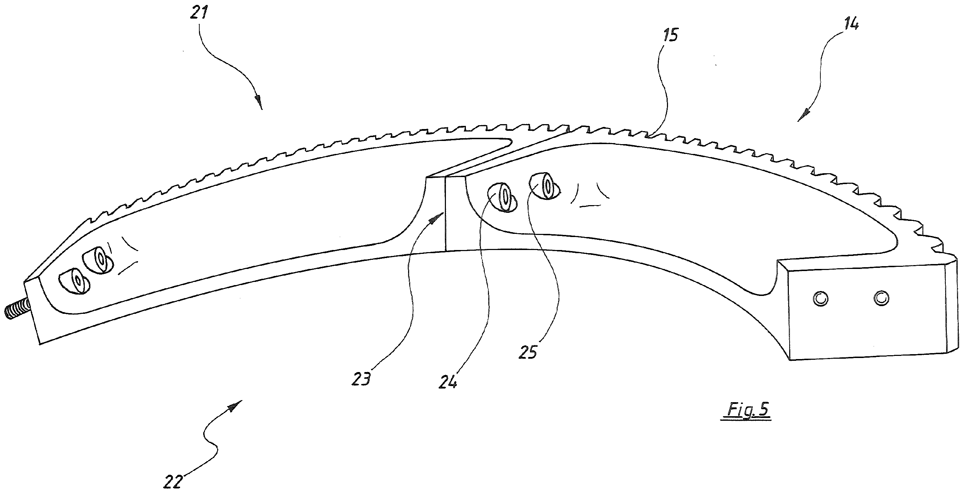

Die Fig. 5 zeigt eine perspektivische Teildarstellung eines aus mehreren Zahnkranzsegmenten 14, 21 gemäß Fig. 4 zusammengefügten nur abschnittsweise dargestellten Zahnkranzes 22. Die Fügestellen sind jeweils als Verschraubungen 23 ausgebildet und weisen in den Schraubenaufnahmestrukturen 19, 20 angeordnete Zylinderkopfschrauben 24, 25 auf, über welche die stirnseitig ausgebildeten Fügeflächen der Zahnkranzsegmente 14, 21 gegeneinander verspannt sind. Gleiche Bauteile sind mit gleichen Bezugszahlen versehen.

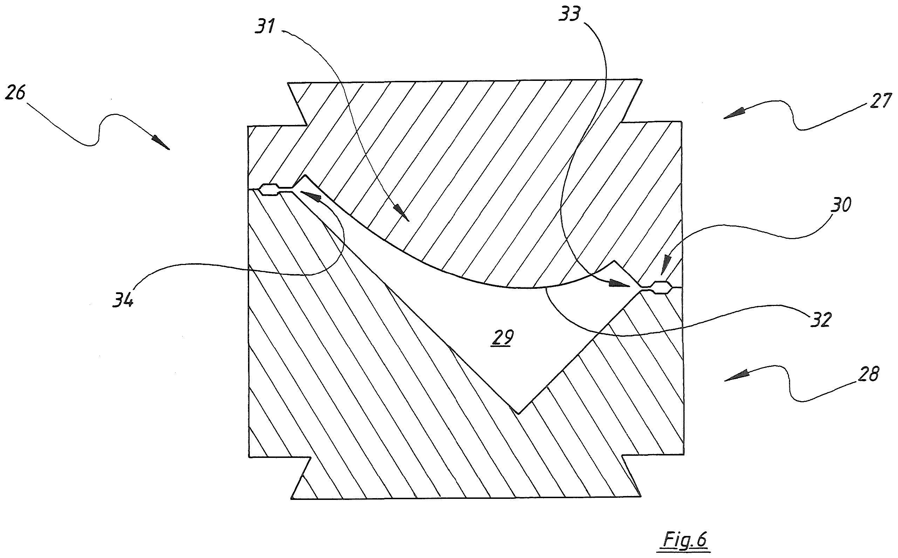

Die Fig. 6 zeigt einen Profilschnitt durch ein Werkzeug für eine erfindungsgemäße Vorrichtung zur Herstellung eines Halbfabrikates gemäß Fig. 2. Das Werkzeug 26 ist ein offenes Schmiedegesenk mit einer zwischen zwei Gesenkteilen 27, 28 ausgebildeten Hohlform 29 sowie einer die Hohlform 29 einfassenden Gratbahn 30. Die einen Kranzsegmentrohling gemäß Fig. 3 abschnittsweise abbildende Hohlform 29 weist die Grundform eines Quaders auf, wobei der Quader eine mittig auf einer seiner Abschnittskanten gelegene Hohlformreduktion 31 aufweist. Mit dieser Hohlformreduktion 31 ist eine am Gesenkteil 27 des Schmiedegesenkes abschnittsweise konvex gewölbte Formfläche 32 abgebildet. Die an der Hohlform 29 einander diagonal gegenüberliegenden und nicht von der Hohlformreduktion 31 betroffenen Abschnittskanten 33, 34 verlaufen an der Gratbahn 30 des Schmiedegesenkes. In der Querschnittsprofilfläche des dargestellten Profilschnittes weist die konvex gewölbte Formfläche 32 einen parabelförmig ausgebildeten Verlauf auf.

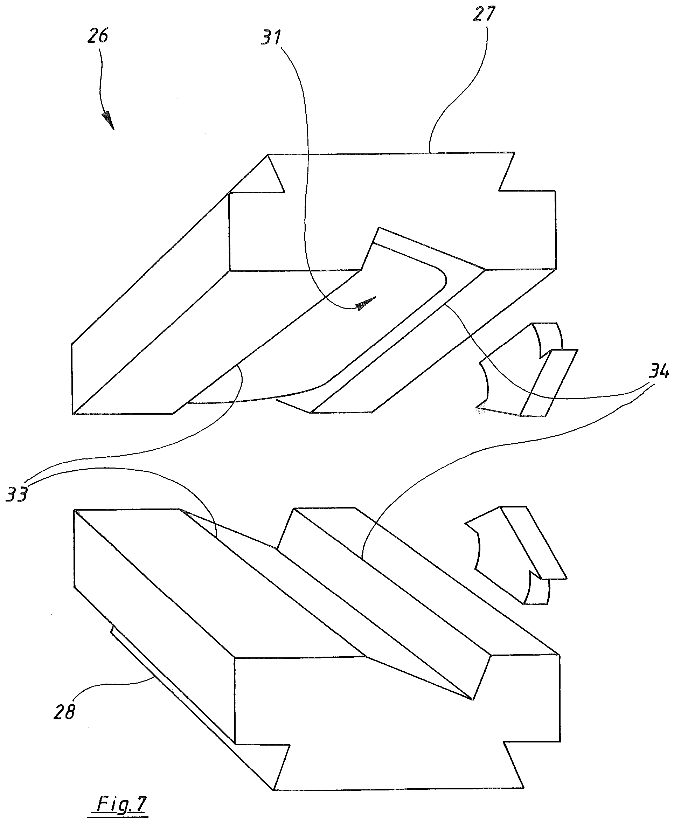

Die Fig. 7 zeigt eine perspektivische Explosionsdarstellung des Werkzeuges gemäß Fig. 6. Diese Darstellung veranschaulicht die Ausbildung des Werkzeuges 26 als offenes Schmiedegesenk mit der entsprechenden Ausbildung seiner Gesenkteile 27, 28. Die Länge der in Richtung der Abschnittskanten 33, 34 gemessenen Hohlformreduktion 31 ist kleiner als, wie in Fig. 2 ersichtlich, die Länge der in Richtung der Längskanten 4, 5 gemessenen Materialausnehmung 7 des Halbfabrikates 2, so dass es zu dessen Herstellung mehrerer Pressenhübe bedarf.

Alle in der vorstehenden Beschreibung und in den Ansprüchen genannten Merkmale sind in einer beliebigen Auswahl mit den Merkmalen der unabhängigen Ansprüche kombinierbar. Die Offenbarung der Erfindung ist somit nicht auf die beschriebenen bzw. beanspruchten Merkmalskombinationen beschränkt, vielmehr sind alle im Rahmen der Erfindung sinnvollen Merkmalskombinationen als offenbart zu betrachten.

### Bezugszahlenliste:

- 1: Rohblock
- 2: Halbfabrikat
- 3: Längskante
- 4: Längskante
- 5: Längskante
- 6: Längskante
- 7: Materialausnehmung
- 8: Schmiedeoberfläche
- 9: Kranzsegmentrohling
- 10: Bogenkante
- 11: Bogenkante
- 12: Materialausnehmung
- 13: Schmiedeoberfläche
- 14: Zahnkranzsegment
- 15: Außenverzahnung
- 16: Anschlussfläche
- 17: Anschlussfläche
- 18: Anschlussfläche
- 19: Schraubenaufnahmestruktur
- 20: Schraubenaufnahmestruktur
- 21: Zahnkranzsegment
- 22: Zahnkranz
- 23: Verschraubungen
- 24: Zylinderkopfschraube
- 25: Zylinderkopfschraube
- 26: Werkzeug
- 27: Gesenkteil
- 28: Gesenkteil
- 29: Hohlform
- 30: Gratbahn
- 31: Hohlformreduktion
- 32: Formfläche
- 33: lange Kante
- 34: lange Kante

## Patentansprüche

1. Zahnkranz aus einzelnen, jeweils wenigstens eine Verzahnung aufweisenden metallischen Zahnkranzsegmenten (14, 21),
**dadurch gekennzeichnet,**
**dass** jedes Zahnkranzsegment (14) wenigstens ein Gesenkschmiedestück ist, dass jedes Gesenkschmiedestück die Grundform eines der Länge nach gekrümmten Quaders aufweist,
**dass** der Quader eine mittig auf einer seiner Bogenkanten (10, 11) gelegene Materialausnehmung (12) aufweist,
**dass** die die Materialausnehmung (12) begrenzende Oberfläche zumindest abschnittsweise konkav gewölbt ausgebildet ist, und
**dass** jedes Gesenkschmiedestück spanend nachbearbeitete Anschlussflächen (16, 17, 18) aufweist.

2. Zahnkranz nach Anspruch 1, **dadurch gekennzeichnet, dass** die konkav gewölbte Oberfläche einen in der Querschnittsprofilfläche des Gesenkschmiedestückes parabelförmig ausgebildeten Verlauf aufweist.

3. Zahnkranz nach Anspruch 1 oder 2, **dadurch gekennzeichnet, dass** die konkav gewölbte Oberfläche eine unbearbeitete Schmiedeoberfläche (13) ist.

4. Zahnkranz nach einem der Ansprüche 1 bis 3, **dadurch gekennzeichnet, dass** jedes Gesenkschmiedestück in seinen Anschlussflächen (16, 17) ausgebildete Schraubenaufnahmestrukturen (19, 20) aufweist.

5. Verfahren zum Herstellen eines Zahnkranzes (22) nach einem der Patentansprüche 1 bis 4, wobei der Zahnkranz aus metallischen Rohblöcken (1) hergestellt wird,
**dadurch gekennzeichnet,**
**dass** die Rohblöcke (1) zu Kranzsegmentrohlingen (9) warmumgeformt werden,
**dass** die Kranzsegmentrohlinge (9) unter Erhalt von Zahnkranzsegmenten (14, 21) spanend bearbeitet werden, und
**dass** die Zahnkranzsegmente (14, 21) zu Zahnkränzen (22) zusammengefügt werden.

6. Verfahren nach Anspruch 5, **dadurch gekennzeichnet, dass** die Rohblöcke (1) aus Strangguss geschnitten werden.

7. Verfahren nach Anspruch 5, **dadurch gekennzeichnet, dass** die Rohblöcke (1) aus einer Schmelze gegossen werden.

8. Verfahren nach einem der Ansprüche 5 bis 7, **dadurch gekennzeichnet, dass** die Rohblöcke (1) beim Warmumformen zu den Kranzsegmentrohlingen (9) zunächst zu Halbfabrikaten (2) gesenkumgeformt und dann zu den Kranzsegmentrohlingen (9) gebogen werden.

9. Verfahren nach Anspruch 8, **dadurch gekennzeichnet, dass** die Halbfabrikate (2) vor dem Biegen zu den Kranzsegmentrohlingen (9) weichgeglüht werden.

10. Verfahren nach einem der Ansprüche 5 bis 9, **dadurch gekennzeichnet, dass** die Kranzsegmentrohlinge (9) vor ihrem Zusammenfügen zu den Zahnkränzen (22) einer Form- und Maßkontrolle unterzogen werden.

11. Verfahren nach Anspruch 10, **dadurch gekennzeichnet, dass** die Kranzsegmentrohlinge (9) nach der Form- und Maßkontrolle gerichtet werden.

12. Verfahren nach Anspruch 5 bis 11, **dadurch gekennzeichnet, dass** die Kranzsegmentrohlinge (9) nach dem Biegen aus den Halbfabrikaten (2) spannungsarm geglüht werden.

13. Verfahren nach Anspruch 12, **dadurch gekennzeichnet, dass** die spannungsarm geglühten Kranzsegmentrohlinge (9) vergütet werden.

14. Verfahren nach einem der Ansprüche 5 bis 13, **dadurch gekennzeichnet, dass** die Zahnkranzsegmente (14, 21) beim Zusammenfügen zu den Zahnkränzen (22) miteinander verschraubt werden.

15. Vorrichtung zur Durchführung des Verfahrens nach einem der Patentansprüche 5 bis 14 mit mindestens einem Werkzeug (26) zum Herstellen von Halbfabrikaten (2) für den Zahnkranz (22),
**dadurch gekennzeichnet,**
**dass** das Werkzeug (26) ein Schmiedegesenk mit wenigstens einer zwischen den Gesenkteilen (27, 28) ausgebildeten Hohlform (29) sowie wenigstens einer die Hohlform (29) einfassenden Gratbahn (30) ist,
**dass** die einen Kranzsegmentrohling (9) abbildende Hohlform (29) die Grundform eines langgestreckten Quaders aufweist,
**dass** der Quader eine mittig auf einer seiner langen Kanten gelegene Hohlformreduktion (31) aufweist,
**dass** mit der Hohlformreduktion (31) eine am Schmiedegesenk zumindest abschnittsweise konvex gewölbte Formfläche (32) abgebildet ist, und
**dass** an der Hohlform (29) einander diagonal gegenüberliegende und nicht von der Hohlformreduktion (31) betroffene lange Kanten (33, 34) an der Gratbahn (30) des Schmiedegesenkes verlaufen.

16. Vorrichtung nach Anspruch 15, **dadurch gekennzeichnet, dass** die konvex gewölbte Formfläche (32) einen in der Querschnittsprofilfläche der Hohlform (29) parabelförmig ausgebildeten Verlauf aufweist.

## Claims

1. A sprocket consisting of individual metallic sprocket segments (14, 21) each having at least one toothing,
**characterised in that**
each sprocket segment (14) is at least one die-forged piece,
each die-forged piece has the basic shape of a cuboid curved along its length,
the cuboid has a material cut-out (12) in the centre of one of its curved edges (10, 11),
the surface delimiting the material cut-out (12) is concavely curved at least in some sections, and
each die-forged piece has post-machined connection faces (16, 17, 18).

2. The sprocket according to Claim 1,
**characterised in that**
the concavely curved surface has a parabolic profile in the cross-sectional profile face of the die-forged piece.

3. The sprocket according to Claim 1 or 2,
**characterised in that**
the concavely curved surface is an unmachined forged surface (13).

4. The sprocket according to any one of Claims 1 to 3,
**characterised in that**
each die-forged piece has screw-receiving structures (19, 20) formed in its connection faces (16, 17).

5. A method for producing the sprocket (22) according to any one of Claims 1 to 4, the sprocket being produced from raw metallic ingots (1),
**characterised in that**
the raw ingots (1) are hot-formed to produce circular segment blanks (9),
the circular segment blanks (9) are machined to obtain sprocket segments (14, 21), and
the sprocket segments (14, 21) are joined together to produce sprockets (22).

6. The method according to Claim 5,
**characterised in that**
the raw ingots (1) are cut from continuously cast metal.

7. The method according to Claim 5,
**characterised in that**
the raw ingots (1) are cast from a melt.

8. The method according to any one of Claims 5 to 7,
**characterised in that**
during hot-forming to produce the circular segment blanks (9), the raw ingots (1) are first die-formed to produce semi-finished products (2) and then bent to form the circular segment blanks (9).

9. The method according to Claim 8,
**characterised in that**
the semi-finished products (2) are soft-annealed before being bent to form the circular segment blanks (9) .

10. The method according to any one of Claims 5 to 9,
**characterised in that**
the circular segment blanks (9) undergo a shape and dimension check before being joined to form the sprockets (22).

11. The method according to Claim 10,
**characterised in that**
the circular segment blanks (9) are adjusted after the shape and dimension check.

12. The method according to Claims 5 to 11,
**characterised in that**
the circular segment blanks (9) are stress-relief-annealed after being bent out of the semi-finished products (2).

13. The method according to Claim 12,
**characterised in that**
the stress-relief-annealed circular segment blanks (9) are hardened and tempered.

14. The method according to any one of Claims 5 to 13,
**characterised in that**
the sprocket segments (14, 21) are screw-fastened to one another when joined to form the sprockets (22).

15. A device for carrying out the method according to any one of Claims 5 to 14, having at least one tool (26) for producing semi-finished products (2) for the sprocket (22),
**characterised in that**
the tool (26) is a forging die having at least one hollow mould (29) formed between the die parts (27, 28) and at least one land (30) surrounding the hollow mould (29),
the hollow mould (29) reproducing a circular segment blank (9) has the basic shape of an elongate cuboid,
the cuboid has a hollow mould reduction (31) in the centre of one of its long edges,
a mould face (32) which is convexly curved at least in some sections on the forging die is reproduced with the hollow mould reduction (31), and
on the hollow mould (29), diagonally opposite long edges (33, 34) which are not affected by the hollow mould reduction (31) run on the land (30) of the forging die.

16. The device according to Claim 15,
**characterised in that**
the convexly curved mould face (32) has a parabolic profile in the cross-sectional profile face of the hollow mould (29).

## Revendications

1. Couronne dentée composée de segments de couronne dentée (14, 21) métalliques comportant respectivement au moins une denture,
**caractérisée en ce que**
chaque segment de couronne dentée (4) est au moins une pièce estampée,
**en ce que** chaque pièce estampée comporte la forme de base d'un parallélépipède courbée selon longueur,
**en ce que** le parallélépipède comporte un évidement de matériau (12) situé sur un de ses bords cintrés (10, 11),
**en ce que** la surface délimitant l'évidement de matériau (12) est constituée au moins par endroits bombée de façon concave et
**en ce que** chaque pièce estampée comporte des surfaces de raccordement (16, 17, 18) retouchées par enlèvement de copeaux.

2. Couronne dentée selon la revendication 1, **caractérisée en ce que** la surface bombée de façon concave comporte un profil constitué en forme parabolique dans la surface profilée de section de la pièce estampée.

3. Couronne dentée selon la revendication 1 ou 2,
**caractérisée en ce que** la surface bombée de façon concave est une surface forgée non usinée.

4. Couronne dentée selon l'une quelconque des revendications 1 à 3, **caractérisée en ce que** chaque pièce estampée comporte des structures de logement de vis (19, 20) constituées dans ses surfaces de raccordement (16, 17).

5. Procédé de fabrication d'une couronne dentée (22) selon l'une quelconque des revendications 1 à 4 sachant que la couronne dentée est fabriquée à partir de lingots bruts métalliques (1),
**caractérisé en ce que**
les lingots bruts (1) sont formés à chaud en ébauches de segment de couronne (9),
**en ce que** les ébauches de segment de couronne (9), sont usinées par enlèvement de copeaux en obtenant des segments de couronne dentée (14, 21) et
**en ce que** les segments de couronne dentée (14, 21) sont assemblés en couronnes dentées (22).

6. Procédé selon la revendication 5, **caractérisé en ce que** les lingots bruts (1) sont découpés à partir d'une coulée continue.

7. Procédé selon la revendication 5, **caractérisé en ce que** les lingots bruts (1) sont coulés à partir d'une coulée.

8. Procédé selon l'une quelconque des revendications 5 à 7, **caractérisé en ce que** les lingots bruts (1) sont formés par estampage lors de la déformation à chaud en ébauches de segment de couronne (9) d'abord en produits semi-finis (2) et ensuite cintrés en ébauches de segment de couronne (9).

9. Procédé selon la revendication 8, **caractérisé en ce que** les produits semi-finis (2) sont soumis à un recuit d'adoucissement avant le cintrage en ébauches de segment de couronne (9).

10. Procédé selon l'une quelconque des revendications 5 à 9, **caractérisé en ce que** les ébauches de segment de couronne (9) sont soumises à un contrôle de forme et de dimensions avant leur assemblage en couronnes dentées (22).

11. Procédé selon la revendication 10, **caractérisé en ce que** les ébauches de segment de couronne (9) sont dressées après le contrôle de forme et de dimensions.

12. Procédé selon l'une quelconque des revendications 5 à 11, **caractérisé en ce que** les ébauches de segment de couronne (9) subissent un recuit de détente après le cintrage à partir des produits semi-finis (2).

13. Procédé selon la revendication 12, **caractérisé en ce que** les ébauches de segment de couronne (9) ayant subi un recuit de détente sont trempés et revenus.

14. Procédé selon l'une quelconque des revendications 5 à 13, **caractérisé en ce que** les segments de couronne dentée (14, 21) sont vissés l'un à l'autre lors de l'assemblage aux couronnes dentées (22).

15. Dispositif d'exécution du procédé selon l'une quelconque des revendications 5 à 14 avec au moins un outil (26) pour réaliser des produits semi-finis (2) pour la couronne dentée (22),
**caractérisé en ce que**
l'outil (26) est une matrice d'estampage avec au moins une forme creuse (29) constituée entre les parties de matrice (27, 28) et au moins un cordon de bavure (30) entourant la forme creuse (29),
**en ce que** la forme creuse (29) reproduisant une ébauche de segment de couronne (9) comporte la forme de base d'un parallélépipède allongé,
**en ce que** le parallélépipède comporte une réduction de la forme creuse (31) située au centre sur un de ses bords longitudinaux,
**en ce qu'**avec la réduction de la forme creuse (31) est reproduite sur la matrice d'estampage au moins par endroits une surface de forme (32) bombée de forme convexe,
**en ce que** sur la forme creuse (29), des bords (33, 34) longitudinaux opposés l'un à l'autre en diagonale et non concernés par la réduction de forme creuse (31) passent sur le cordon de bavure (30) de la matrice d'estampage.

16. Dispositif selon la revendication 15, **caractérisé en ce que** la surface de forme (32) bombée de forme convexe comporte un profil constitué en forme parabolique dans la surface profilée de section de la forme creuse (29).
